# EUROPEAN PATENT APPLICATION

(11) **EP 0 845 570 A2**
(43) Date of publication of application: **03.06.1998**
(21) Application number: 97309629.0
(22) Date of filing: 28.11.1997
(51) Int. Cl.: E05F 15/00, E05F 15/16, B60J 10/00, G01L 1/20

(54) **Anti-trap system**

(30) Priority: 28.11.1996 GB 9624744
(71) Applicant: Standard Products Limited, Huntingdon Cambridgeshire PE18 6NU (GB)
(72) Inventor: Harding, Piers Sebastian, Cambridgeshire, PE17 5LF (GB)
(74) Representative: Jones, Michael Raymond

(57) **Abstract**

There is disclosed an anti-trap system comprising:
a peripheral member 1 defining a zone capable of being closed by a reversibly movable closure member 11, the peripheral member 1 having a recess 9 defined by opposing side elements 2,5 and a bridging element 8 extending between the opposing side elements 2,5;
a channel-shaped sealing member 21 located in the recess 9 of the peripheral member 1 and having opposing first and second side walls 22, 23 with a web 24 therebetween, thereby defining a channel 35;
a base member 41 located between the bridging element 8 of the peripheral member 1 and the web 24 of the sealing member 21, with part of the base member having a rocking surface 43 allowing the base member 41 to rock relative to the bridging element 8; and
located in a space between the base member 41 and the web 24 of the sealing member 21, a force sensing resistor 61 having an active zone 63 and a dead zone 64;
wherein the arrangement is such that, if a force is applied along the first side wall 22 of the sealing member 21 towards the web 24, an abutment region 38 of the sealing member 21 acts on the active zone 63 of the force sensing resistor 61, and that, if a force is applied along the second side wall 23 of the sealing member 21 towards the web 24, the base member 41 is caused to rock relative to the bridging element 8 with an abutment region 50 of the base member 41 acting on the active zone 63 of the force sensing resistor 61, but that if a closure member 11 enters the channel 35 of the sealing member 21 it can abut the web 24 of the sealing member 21 without activating the active zone 63 of the force sensing resistor 61.

## Description

This invention relates to an anti-trap system and is particularly, but not exclusively, concerned with an arrangement to prevent fingers being trapped by a closing window pane in a motor vehicle. It is to be appreciated, however, that the system of the present invention can be employed in any other arrangement where it is desired to prevent an item (which may be animate or inanimate) from becoming painfully trapped by a closing closure member.

In respect of anti-trap systems for use in conjunction with motor vehicles, there is a considerable body of prior art, but many such systems are designed only to detect the presence of potentially trapped fingers or other items on what is to be the inside of the closing window pane i.e. within the body of the motor vehicle.

The problem has become serious in view of the advent of so-called "one touch up" closing systems in which a window control button is pressed once and then the window continues to close without the button remaining pressed. The use of such systems now makes imperative the availability of anti-trap system which can detect a finger or other item trapped on what is to be the inside or the outside of the closing window pane, such detection then causing the motor (which drives the window pane) firstly to stop and secondly to reverse.

Different anti-trap systems employ different sensing means, but the sensing means of interest in relation to the present invention is a so-called force sensing resistor (F.S.R.). Details of such a resistor are contained in Luxembourg Patent Specification No. 87942 in the name of Interlink Electronics Europe S.a.r.l.. That specification not only describes a force sensing resistor but also discloses its incorporation into a closing system, such as a sliding door.

According to the present invention, there is a provided an anti-trap system comprising:
a peripheral member defining a zone capable of being closed by a reversibly movable closure member, the peripheral member having a recess defined by opposing side elements and a bridging element extending between the opposing side elements;
a channel-shaped sealing member located in the recess of the peripheral member and having opposing first and second side walls with a web therebetween, thereby defining a channel;
a base member located between the bridging element of the peripheral member and the web of the sealing member, with part of the base member having a rocking surface allowing the base member to rock relative to the bridging element; and
located in a space between the base member and the web of the sealing member, a force sensing resistor having an active zone and a dead zone;
wherein the arrangement is such that, if a force is applied along the first side wall of the sealing member towards the web, an abutment region of the sealing member acts on the active zone of the force sensing resistor, and that, if a force is applied along the second side wall of the sealing member towards the web, the base member is caused to rock relative to the bridging element with an abutment region of the base member acting on the active zone of the force sensing resistor, but that if a closure member enters the channel of the sealing member it can abut the web of the sealing member without activating the active zone of the force sensing resistor.

Preferably the anti-trap system of the present invention includes first retaining means intended to prevent the escape of the sealing member from the peripheral member, whilst allowing some relative movement between the sealing member and the peripheral member.

Preferably the anti-trap system of the present invention also includes second retaining means intended to prevent escape of the sealing member from the base member, whilst allowing some relative movement between the base member and the sealing member.

Preferably the base member has provision to allow one longitudinally extending region of the base member to rock without inducing too great a tendency to rock in adjacent longitudinal regions of the base member.

For a better understanding of the present invention, and to show how the same may be carried into effect, reference will now be made, by way of example, to the accompanying drawings, in which:
Figure 1 is a vertical section through an embodiment of anti-trap system in accordance with the present invention;
Figure 2 is an enlarged end view of a base member which is one of the components shown in Figure 1;
Figure 3 is a side view, on a reduced scale, of the base member shown in Figure 2;
Figure 4 is a view similar to that in Figure 1 but on a reduced scale, and showing the effect of force being applied in the direction of the arrow A to one side wall of the channel-shaped sealing member forming part of the system of Figure 1;
Figure 5 is a view similar to that of Figure 1, but on a reduced scale, and showing the effect of force being applied in the direction of the arrow C to the other side wall of the channel-shaped sealing member; and
Figure 6 is a view similar to that of Figure 1, but on a reduced scale, and showing the action of a closing window pane in relation to the anti-trap system.

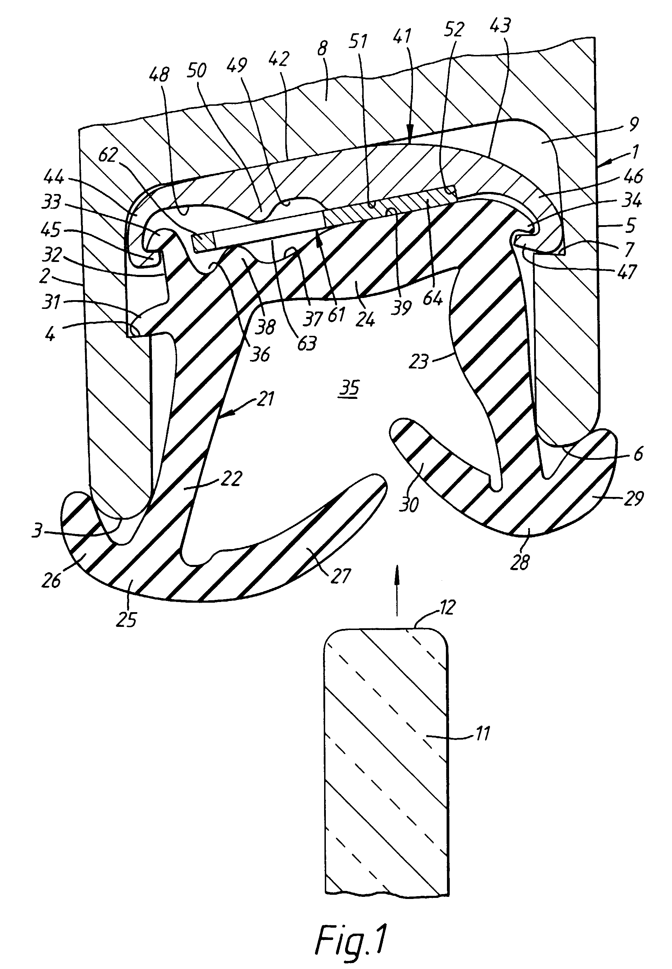

With regard firstly to Figure 1 there is shown a peripheral member generally indicated by the reference numeral 1 which has a first side element in the form of a first side wall 2 having its own free end 3 and with, at an intermediate region along its length, a step (detent) 4 formed such that the free end region has a thickness greater than the remainder of the first side wall 2. The peripheral member 1 also has a second side element in the form of a second side wall 5 which has its own free end 6 and also has at an intermediate position along its length a step (detent) 7 which is a mirror image of the step 4. The peripheral member 1 also has, extending between the first and second side walls 2 and 5, a bridging element in the form of a bridge 8. Defined by the first side wall 2, the bridge 8 and the second side wall 5 is a recess 9.

Below, and spaced from, the anti-trap system of Figure 1 is a reversibly movable closure member in the form of a window pane 11 having a leading edge 12 intended, during the closing mode, to move towards the anti-trap system so as to effect a seal.

Located within the recess 9 of the peripheral member 1 is a channel-shaped sealing member 21 which has a first side wall 22, an opposing side wall 23 and, extending between the foot of the two side walls 22 and 23, a web 24. The first side wall 22 has a free end 25 extending outwardly from which is an outward lip 26 and extending inwardly is an inward lip 27. Similarly the second side wall 23 has a free end 28 from which outwardly projects an outer lip 29 and inwardly projects an inward lip 30.

Near where the side wall 22 meets the web 24 is an outwardly directed projection 31.

Also near the region where the side wall 22 meets the web 24 is a limb 32 projecting towards the bridge 8 of the peripheral member 1 and from the free end region of which extends in an outwardly direction a projection 33 intended to abut the base member in a manner to be described hereinbelow.

In the region where the second side wall 23 meets the web 24 is an outward projection 34 also, like the projection 33, intended to abut the base member in a manner to be described below.

Defined by the first side wall 22, the web 24 and the second side wall 23 is a channel 35 for receiving the leading edge 12 of the window pane 11.

Adjacent to the foot of the limb 32, but on the opposite side to the projection 33, is a first recess 36 provided in the web 24 and/or the foot of the first side wall 22, and there is a second recess 37 spaced slightly from the first recess 36 and provided in the web 24 on that side thereof remote from the channel 35. Projecting between the first and second recesses 36 and 37 is an abutment region in the form of a nose 38.

Another region of the web 24 on that side remote from the channel 35 has a rectilinear surface region 39.

Another major component present in the system illustrated in Figure 1 is a base member 41 which is preferably more rigid than the sealing member 21. The base member 41 has a rectilinear upper surface 42 which smoothly abuts the bridge 8 of the peripheral member 1. The rectilinear surface 42 extends only over part of the upper surface of the base member 41, the right hand end region being a curved surface 43 leading on from the rectilinear surface 42. Curving round from the left hand end region of the rectilinear surface 42 of the base member 41 is an arm 44 which terminates in an inwardly directed hook capable of engaging with the projection 33 of the sealing member 21. Somewhat similarly, the curved surface 43 of the base member 41 leads into a right hand arm 46 which terminates in an inwardly directed hook 47 which is capable of engaging with the projection 34 of the sealing member 21. The underside of the base member 41 is provided with two spaced-apart recesses, namely a first recess 48 and a second recess 49, and is also provided between those two recesses, with an abutment member in the form of a nose 50. To the right (in Figure 1) of the second recess 49 is a rectilinear surface 51 terminating in a step 52 which then leads into the right hand arm 46.

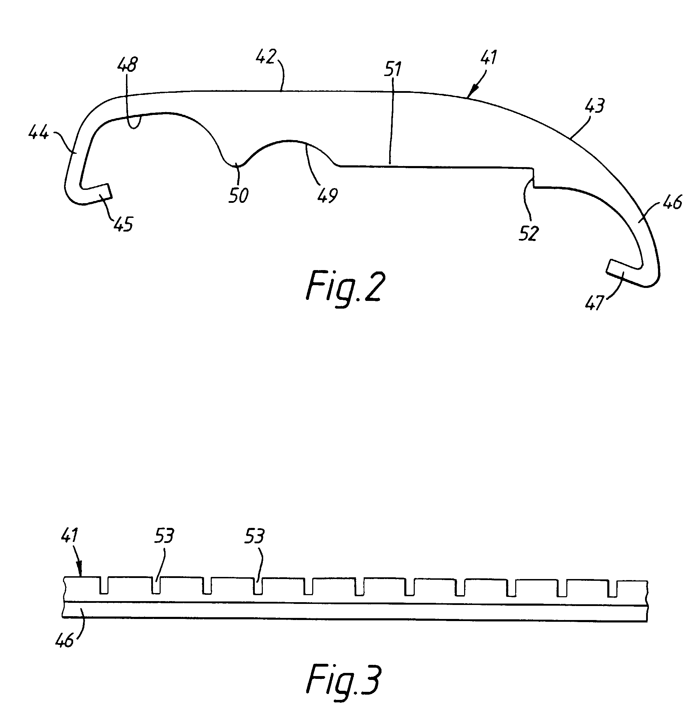

As more clearly shown in Figure 3 the upper surface region of the base member 41 is provided with a series of spaced cuts 53, the purpose of which will be described in more detail hereinbelow.

Also present in the system of the present invention illustrated in Figure 1 is a force-sensing resistor generally indicated by the reference numeral 61. The resistor has, in going from its left hand end to its right hand end, a "dead" zone 62, an active zone 63 and another "dead" zone 64. The upper side of the dead zone 64 of the resistor 61 abuts the rectilinear surface 51 of the base member 41 and the lower side of the dead zone 64 of the resistor 61 abuts the rectilinear surface 39 of the sealing member 21. The majority of the active zone 63 of the resistor 61 is clear of abutting components. However, the nose 50 of the base member 41 just touches an upper central region of the active zone 63, and the nose 38 of the sealing member 21 just contacts a left hand end region of the active zone 63 of the resistor 61.

It can be seen that the free end of the nose 50 lies in the same general plane as the rectilinear surface 51; and that the free end of the nose 38 lies in the same general plane as the rectilinear surface 39.

Figure 2 merely shows the base member 41 in more detail, in isolation. Figure 3 is, as indicated above, a side view of the base member 41 showing, over the upper region of much of the base member 41 a series of cuts 53 provided at intervals. The purpose of these cuts is to allow one longitudinal portion of the base member 41 to rock, during the rocking mode described in more detail below, even when adjacent longitudinal portions of the base member 41 are not subjected to forces tending to cause them to rock. This is important because, in practice, a finger or other item which could be trapped is likely to extend over only a small portion of the total length of the anti-trap system.

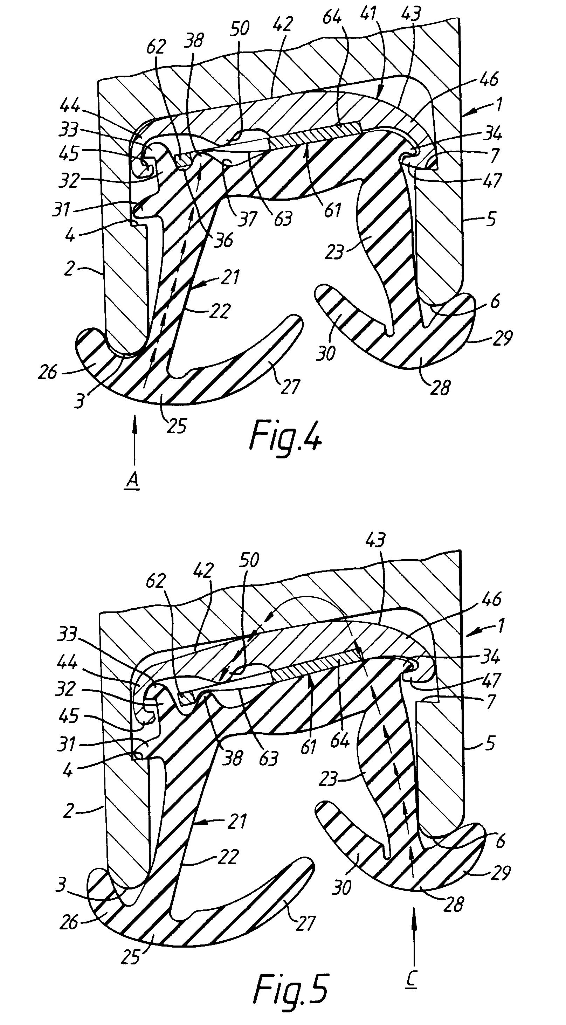

With reference now to Figure 4, all of the items indicated therein bear reference numerals already mentioned in relation to Figure 1. Let us imagine that an upward force acting in the direction of the arrow A is applied to the free end 25 of the first side wall 22 of the sealing member 21. This could be caused by the presence of a finger trapped on one side of a closing window pane. The force in the direction A causes upward movement of the side wall 22 but this is limited by the outward lip 26 coming fully to rest against the free end 3 of the first side wall 2. Upward movement of the first side wall 22 causes the projection 31 to move up and away from the step 4 of the peripheral member 1, and also causes the projection 33 to move up and away from the hook 45 of the base member 41. Most importantly, however, the upward movement of the first side wall 22 causes the nose 38 to act forcibly on the underside of the active zone 63 of the force sensitive resistor 61, thereby activating the resistor which, in turn, can through circuitry not shown cause a motor driving the window 11 in an upwardly direction firstly to stop and secondly to reverse to free the trapped item.

It can be seen that the application of the force in the direction A has no noticeable effect on the central and right hand portion (as shown in Figure 1) of the components of the system.

When, in contrast, an upwardly directed force is applied in the direction of the arrow C to the free end 28 of the second side wall 23 of the sealing member 21, the second wall 23 is caused to move upwardly but is limited in its upward movement by the outward lip 29 fully engaging the free end 6 of the second side wall 5 of the peripheral member 1. The upward movement of the second side wall 23 causes upward movement of the right hand region of the base member 41 thus causing the base member 41 to rock about its curved rocking surface 43. The projection 34 of the sealing member 21 is still adjacent the nose 47 of the base member 41. During the upward movement of the side wall 23 of the sealing member 21 and the afoementioned rocking action, the first side wall 22 remains in its starting position, being restrained from any tendency to move downwards by the interaction of the projection 31 on the step 4. However, the rocking action of the base member 41 causes the nose 50 of the base member 41 to act downwardly on the upper surface of the active zone 63 of the force sensitive resistor 61, causing the resistor to be urged downwardly onto the nose 38 of the sealing member 21, which nose 38 deforms and hence activates the active zone 63 of the sensor 61, thereby sending the appropriate signal to the motor. During the rocking motion of the base member 41 the left hand region of that base member moves downwardly, with the hook 45 of the base member 41 moving downwards and clear of the projection 33 of the sealing member 21.

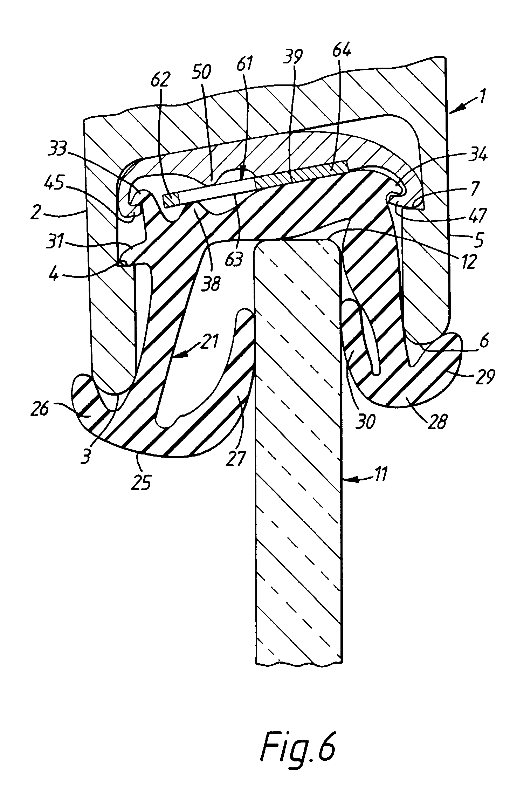

In another scenario, as illustrated in Figure 6, the moving edge 12 of the window pane 11 moves upwardly, causing upward deflection of the lips 27 and 30 but having no other significant effect upon the anti-trap system. Even if there is a tendency for slight overrun of the window 11, it merely abuts the web 24 of the sealing member 21 which causes force to be applied to the sensor 61 but only in the dead zone 64 thereof, so that the window can shut firmly without any inappropriate activation of the sensor 61 which might otherwise cause premature stopping of the window and even its reversal.

Reverting to Figure 1, it can be seen that the sealing member 21 is held in place relative to the peripheral member 1 by the interaction of the projection 31 and step 4, in the left hand region, and by the interaction of the projection 34, hook 47 and step 7, in the right hand region. The force sensitive resistor 61 is neatly sandwiched between the upper surface of the sealing member 21 and the lower surface of the base member 41. As can be appreciated, there is provision, in the left hand region, for relative movement between the base member 41 and the sealing member 21, and there is provision in the right hand region of the system for relative movement of a rocking nature between the base member 41 and the peripheral member 1.

The base member 41 can take the form of some appropriate extrudate or might be part of the window frame itself, being the upper part of the "door" of a motor vehicle. The sealing member 21 is typically an elastomeric glass run profile, and the base member 41 can be semi-rigid; in fact, it can have a Shore "A" hardness of 90 and the cuts 53 in the upper surface can, for instance, have a width of about 1.0mm ± 0.5mm with the interval between the centre of one cut and the centre of the adjacent cut being, for instance, 14mm ± 1mm.

The sealing member 21 can be formed of ethylene propylene diene monomer (EPDM) with a Shore hardness of approximately 70.

## Claims

1. An anti-trap system comprising:
a peripheral member defining a zone capable of being closed by a reversibly movable closure member, the peripheral member having a recess defined by opposing side elements and a bridging element extending between the opposing side elements;
a channel-shaped sealing member located in the recess of the peripheral member and having opposing first and second side walls with a web therebetween, thereby defining a channel;
a base member located between the bridging element of the peripheral member and the web of the sealing member, with part of the base member having a rocking surface allowing the base member to rock relative to the bridging element; and
located in a space between the base member and the web of the sealing member, a force sensing resistor having an active zone and a dead zone;
wherein the arrangement is such that, if a force is applied along the first side wall of the sealing member towards the web, an abutment region of the sealing member acts on the active zone of the force sensing resistor, and that, if a force is applied along the second side wall of the sealing member towards the web, the base member is caused to rock relative to the bridging element with an abutment region of the base member acting on the active zone of the force sensing resistor, but that if a closure member enters the channel of the sealing member it can abut the web of the sealing member without activating the active zone of the force sensing resistor.

2. A system according to claim 1, which also includes first retaining means intended to prevent the escape of the sealing member from the peripheral member, whilst allowing some relative movement between the sealing member and the peripheral member.

3. A system according to claim 1 or 2, which also includes second retaining means intended to prevent escape of the sealing member from the base member, whilst allowing some relative movement between the base member and the sealing member.

4. A system according to any preceding claim, in which the base member has provision to allow one longitudinally extending region of the base member to rock without inducing too great a tendency to rock in adjacent longitudinal regions of the base member.
